Europäisches Patentamt

European Patent Office

Office européen des brevets

(11) Veröffentlichungsnummer: **0 333 150**
**A2**

## (12) EUROPÄISCHE PATENTANMELDUNG

(21) Anmeldenummer: 89104562.7

(22) Anmeldetag: 15.03.89

(51) Int. Cl.⁴: **A01B 33/12 , A01B 49/02**

(30) Priorität: 18.03.88 DE 8803705 U

(43) Veröffentlichungstag der Anmeldung:
20.09.89 Patentblatt 89/38

(84) Benannte Vertragsstaaten:
**AT BE CH DE ES FR GB IT LI NL**

(71) Anmelder: **Dutzi, Friedhelm**
**Kapellenstrasse 14**
**D-7526 Ubstadt-Weiher 4(DE)**

(72) Erfinder: **Dutzi, Friedhelm**
**Kapellenstrasse 14**
**D-7526 Ubstadt-Weiher 4(DE)**

(74) Vertreter: **Brommer, Hans Joachim, Dr.-Ing. et al**
**Patentanwälte Dipl.-Ing. R. Lemcke Dr.-Ing. H.J. Brommer Bismarckstrasse 16 Postfach 4026**
**D-7500 Karlsruhe 1(DE)**

(54) **Bodenbearbeitungsgerät mit Teleskop-Schutzklappe.**

(57) Die Erfindung betrifft ein Bodenbearbeitungsgerät mit einem Gestell, in dem zumindest ein Zinken-rotor mit horizontaler Drehachse und in Fahrtrichtung dahinter zumindest eine quer zur Fahrtrichtung angeordnete Schutzklappe, insbesondere mit einer Sävorrichtung eingebaut sind. Wesentlich ist, daß die Unterkante der Schutzklappe etwa vertikal in der Höhe verstellbar ist, so daß die Eindringtiefe der Schutzklappe und somit auch die Einstelltiefe der Sävorrichtung gleichermaßen verstellt werden können, ohne daß die Sävorrichtung neu eingestellt werden muß.

Fig. 1

## Bodenbearbeitungsgerät mit Teleskop-Schutzklappe

Die Erfindung geht aus von einem Bodenbearbeitungsgerät bestehend aus einem an eine Zugmaschine ankuppelbaren oder einen eigenen Antrieb aufweisenden Gestell, in dem mindestens eine angetriebene Vorrichtung zur mechanischen Lockerung des Bodens, insbesondere ein Zinkenrotor mit horizontaler Drehachse und in Fahrtrichtung dahinter zumindest eine quer zur Fahrtrichtung angeordnete Schutzklappe sowie gegebenenfalls dahinter eine Sävorrichtung eingebaut sind.

Das Bodenbearbeitungsgerät beruht auf dem Prinzip der nicht wendenden Bodenbearbeitung. Lockerungsschare brechen den Boden über die gesamte Arbeitsbreite auf, ohne ihn zu wenden. Ein Zinkenrotor, zum Beispiel eine Welle mit in den Boden eindringenden Lockerungswerkzeugen, arbeitet Ernterückstände und Gründüngung in den oberen Bodenhorizont ein und sorgt dabei für den für eine Bandsaat notwendigen Erdstrom. Eine Packerwalze führt die Maschine in der eingestellten Tiefe und sorgt für die nötige Rückverfestigung des Bodens.

Der Zinkenrotor rotiert in einem Gehäuse, das an seinem rückwärtigen Ende - durch schwenkbar gelagerte Schutzklappen - den Rotorraum nach hinten abschließt. Der Zweck einer solchen Schutzklappe ist die Regulierung des abfließenden Erdstroms. Hierzu kann die Schutzklappe in einem bestimmten Bereich geschwenkt werden, wodurch einerseits der Abstand zwischen Rotor und Schutzklappe und andererseits die Höhe der Unterkante der Schutzklappe gegenüber dem Bodenniveau variiert wird. So wird sie beispielsweise bei einem zu bearbeitenden Boden mit viel Ernterückständen weit vom Rotor weggeschwenkt, um so ein Verstopfen des Rotors zu verhindern. Bei einem feuchten schweren Boden dagegen wird die Schutzklappe möglichst nahe an den Rotor herangeschwenkt, um ein Festhaften oder Anbacken des feuchten Bodens an der Schutzklappe zu verhindern.

Ein derartiges Bodenbearbeitungsgerät ist durch die Anmelderin bekannt. Die zuvor beschriebene Schutzklappe hat nun zwei Nachteile. Zum einen wird durch die Einstellung des Schwenkwinkels der Schutzklappe auch die Eindringtiefe der Schutzklappenunterkante gegenüber dem Bodenniveau verstellt. Zum anderen wird dadurch auch die Einstelltiefe der Sävorrichtung beeinflußt. Denn die Sävorrichtung, die parallel zur Schutzklappe angeordnet ist, ist mit dieser gelenkig verbunden. Somit führt die Sävorrichtung nahezu die gleiche Schwenkbewegung aus wie die Schutzklappe selbst. Dies ist notwendig, um die Sävorrichtung vor größeren Hindernissen wie Steine oder Felsen während der diese Hindernisse überwindenden Bodenbearbeitung zu schützen. Vorhandene Hindernisse drücken die schwenkbar gelagerte Schutzklappe aus dem Gefahrenbereich. Mit dem Verschwenken der Schutzklappe wird die über Kopplungselemente an der Schutzklappe befestigte Sävorrichtung angehoben. Somit wird auch sie vor Beschädigungen geschützt. Zusammenfassend kann man also feststellen, daß ein Verschwenken der Schutzklappe einen unterschiedlich hohen Erdstrom und eine unterschiedlich tiefe Saatgutablage mit sich bringt. Denn wird die Schutzklappe so eingestellt, daß ein großer Abstand zwischen ihr und dem Zinkenrotor entsteht, dann ist die Eindringtiefe der Saatgutablage ins Erdreich nur noch sehr gering. Folglich muß die Saatgutablage neu eingestellt werden. Dies geschieht über einen zeitraubenden Justageprozeß.

Die Aufgabe der Erfindung besteht daher darin, die derzeitige Schutzklappenkonstruktion so zu verbessern, daß die Eindringtiefe der Schutzklappenunterkante verstellt werden kann, ohne daß hierbei die Sävorrichtung neu justiert werden muß. Trotzdem sollen Schutzklappe und Sävorrichtung bei Beschädigungsgefahr einem Hindernis ausweichen können.

Diese Aufgabe wird durch einen erfinderischen Schritt dadurch gelöst, daß die Unterkante der Schutzklappe etwa vertikal verstellbar ist. Dadurch kann die Höhe des durch den Zinkenrotor erzeugten abfließenden Erdstrom eingestellt werden, ohne den lichten Abstand zwischen Zinkenrotor und Schutzklappe zu variieren und ohne die Saatgutablage in ihrer Eindringtiefe nachzustellen. Somit lassen sich der Abstand zwischen Zinkenrotor und Schutzklappe, die Höhe des abfließenden Erdstroms und die Eindringtiefe der Sävorrichtung ins Erdreich ausschließlich durch Einstellen der Schutzklappenparameter (Schutzklappenschwenkwinkel, aktive Länge der Schutzklappe) den gegebenen Bodenbeschaffenheiten genau anpassen.

Um dies zu verwirklichen, wird die Sävorrichtung am unteren Klappenbereich befestigt. Wird also der Abstand zwischen der Unterkante des unteren Klappenbereichs und dem durchschnittlichen Bodenniveau verringert oder vergrößert, so wird mit ihm um das gleiche Maß und in der gleichen Richtung die Saatgutablage verstellt.

Konstruktiv läßt sich dies verwirklichen, indem man die Schutzklappe zweiteilig ausgestaltet, nämlich einem Klappenoberteil das am Gestell gelagert wird und einem ausfahrbaren Klappenunterteil das wiederum am Klappenoberteil befestigt ist. Dabei kann das Klappenoberteil starr oder schwenkbar am Gestell gelagert sein.

Das Klappenunterteil kann am Klappenoberteil an mindestens einer Schiene parallel oder fluchtend geführt sein. Die Führung kann auf verschiedene Weisen realisiert sein. Eine Variante wäre die teleskopartige Unterbringung des Klappenunterteils im Klappenoberteil. Dazu muß das Klappenoberteil das Klappenunterteil nicht an seinem ganzen Umfang umfassen. Bei einer anderen Variante kann das untere Klappenteil hinter dem oberen Klappenteil angeordnet sein. Die mechanische Kopplung zwischen beiden Teilen kann dabei eine Parallel- oder Kurvenführung übernehmen.

Zur Verstellung des Klappenunterteils gegenüber dem Klappenoberteil kann ein Schraubgetriebe, das von Hand oder motorisch angetrieben ist, dienen. Der Antrieb für die Verstellung des unteren Klappenteils kann dabei beispielsweise zentral in der Mitte oder dezentral, einseitig an der Schutzklappe befestigt sein. Selbstverständlich sind auch mehrere einzelne Antriebe die in den Führungen oder benachbart zu den Führungen angebracht sind, denkbar.

Neben der zweiteiligen Ausführung der Schutzklappe gibt es noch eine weitere einteilige Variante. Dabei ist die Klappe in vertikaler Richtung einteilig ausgebildet und besteht aus einem weichelastischem Material. Wird für eine derartige Klappe ein sehr dehnbarer Gummi oder Kunststoff eingesetzt, so kann dieser, eingespannt zwischen zwei horizontalen und parallelen Stangen, deren Abstand verstellbar ist, eine solche Schutzklappe bilden. Wird ein weniger dehnbarer Gummi oder Kunststoff verwendet, so kann dieser Werkstoff ebenfalls eingespannt zwischen zwei horizontalen parallelen Stangen beispielsweise auf der oberen Stange aufgerollt werden, um die Höhe der so gebildeten Schutzklappe zu variieren.

Diese einzelnen in vertikaler Richtung gesehen ein-oder mehrteiligen Schutzklappen können quer zur Fahrtrichtung des Bodenbearbeitungsgeräts über die gesamte Gerätebreite aus einem oder mehreren Teilen bestehen. Bei einer mehrfachen Unterteilung - quer zur Fahrtrichtung - werden die einzelnen Klappensegmente mit eigenen Höhenverstellungen ausgerüstet. Mit der Unterteilung der Schutzklappe kann auch die Saatablage unterteilt werden.

Eine vorteilhafte Ausgestaltung der Erfindung besteht darin, daß die in vertikaler Richtung einteilig ausgeführte Schutzklappe in ihrer Gesamtheit vertikal verfahrbar am Gestell geführt ist. Sie kann dazu seitlich an Schienen des Gestelles geführt sein, die ihrerseits schwenkbar gelagert sind. Das Verfahren der Schutzklappe erfolgt zweckmäßig durch Hydraulikzylinder.

Weitere Einzelheiten und Merkmale der Erfindung ergeben sich aus der nachfolgenden Beschreibung eines Ausführungsbeispiels anhand der Zeichnung.

Fig. 1: Seitenansicht eines Bodenbearbeitungsgerätes mit Teilschnitten,
Fig. 2: Rückansicht einer höhenverstellbaren Schutzklappe mit Saatlegeröhren,
Fig. 3: Draufsicht auf die höhenverstellbare Schutzklappe mit Saatlegeröhren,
Fig. 4: Seitenansicht einer höhenverstellbaren Schutzklappe mit Saatlegeröhren und deren Verstellmechanismus,
Fig. 5: Teilschnitt durch eine Führung der höhenverstellbaren Schutzklappe (vergrößert dargestellt).
Fig. 6: Seitenansicht eines abgeänderten Bodenbearbeitungsgerätes.

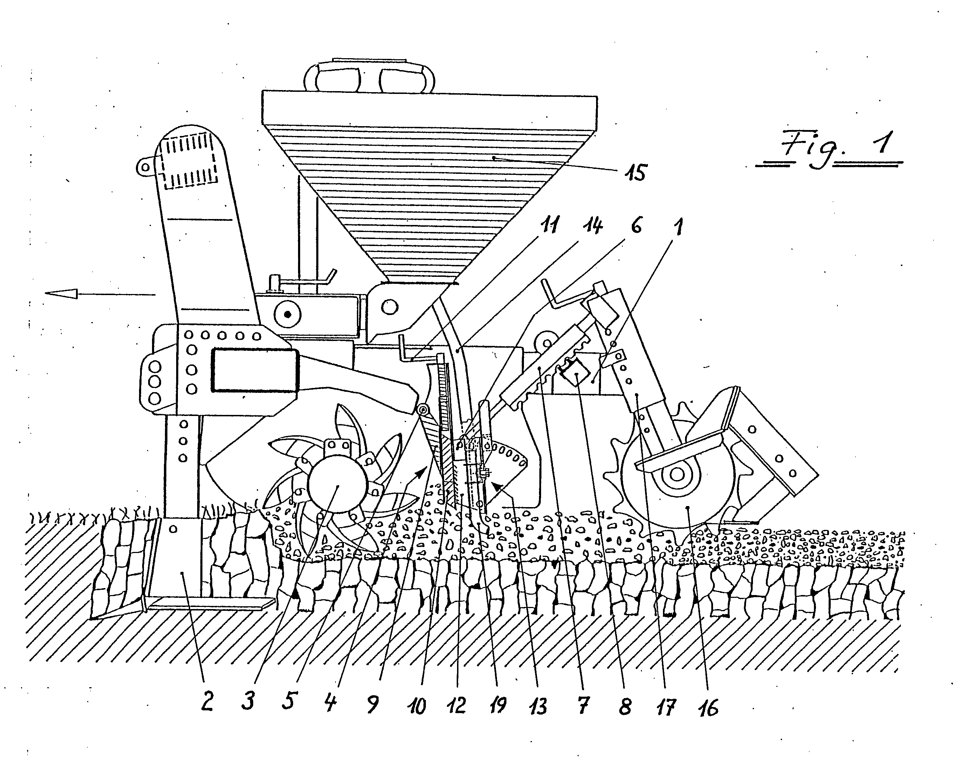

Wie die Figur 1 zeigt, besteht das Bodenarbeitsgerät aus einem Gestell 1, an dem alle wesentlichen Antriebsteile und Bearbeitungswerkzeuge gelagert sind. In Fahrtrichtung gesehen befinden sich vorne am Gerät mehrere nebeneinander angeordnete, den Boden horizontal durchtrennende Scharen 2. Direkt hinter den Scharen liegt ein horizontal gelagerter und fremdangetriebener Zinkenrotor 3.

Ihm nachgeschaltet ist die höhenverstellbare Schutzklappe 4. Die Schutzklappe 4 ist einerseits über die Achse 5 am Gestell 1 schwenkbar gelagert und andererseits über den Anlenkpunkt 6 mittels eines Stoßdämpfers 7 am Vierkantrohr 8 des Gestelles 1 abgestützt. Der Stoßdämpfer 7 ermöglicht ein gedämpftes rückwärtiges Ausweichen der Schutzklappe bei größeren Hindernissen.

Die Schutzklappe 4 selbst besteht aus einem Klappenoberteil 9, das direkt am Gehäuse schwenkbar gelagert ist und einem Klappenunterteil 10, das vom Klappenoberteil geführt über die Handkurbel 11 höhenverstellbar ist. Neben dem Anlenkpunkt 6 befindet sich am Klappenunterteil 9 die Verstelleinrichtung 12, die für die Justage der Sävorrichtung vorgesehen ist. Oberhalb der Sävorrichtung befindet sich der Saatgutvorratbehälter 15. Er ist mittels der Saatgutzuführung 14 mit der Sävorrichtung 13 verknüpft. Am rückwärtigen Ende des Geräts befindet sich eine Packerwalze 16. Sie ist höhenverstellbar in einer Vierkantführung 17 gelagert. Die Vierkantführung 17 ist starr am Gestell 1 angeordnet.

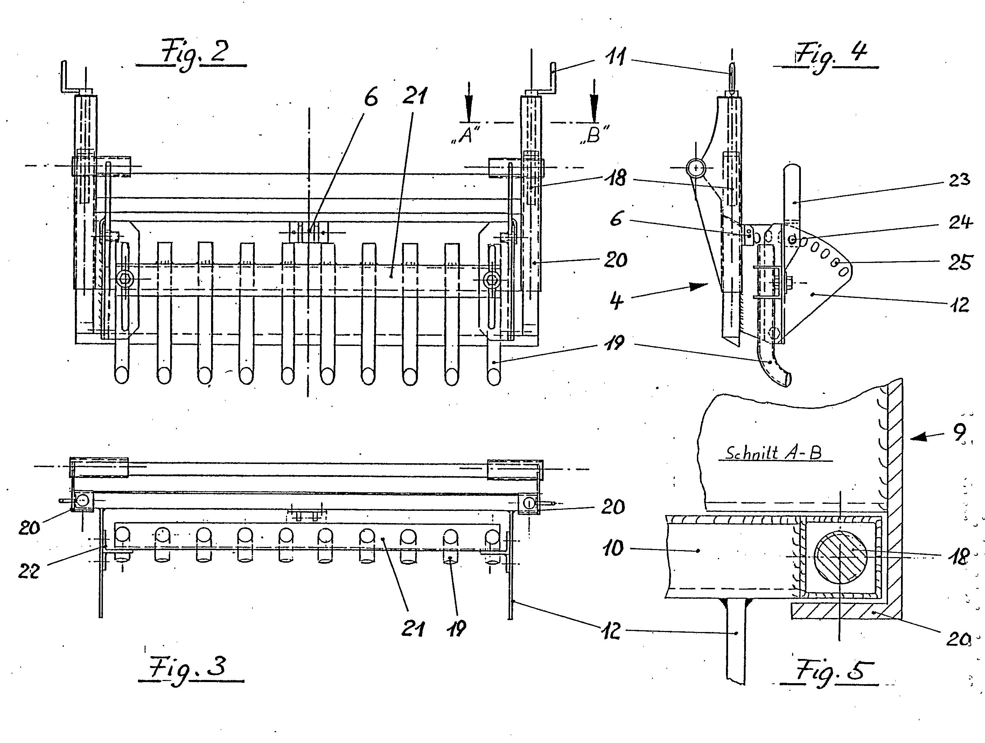

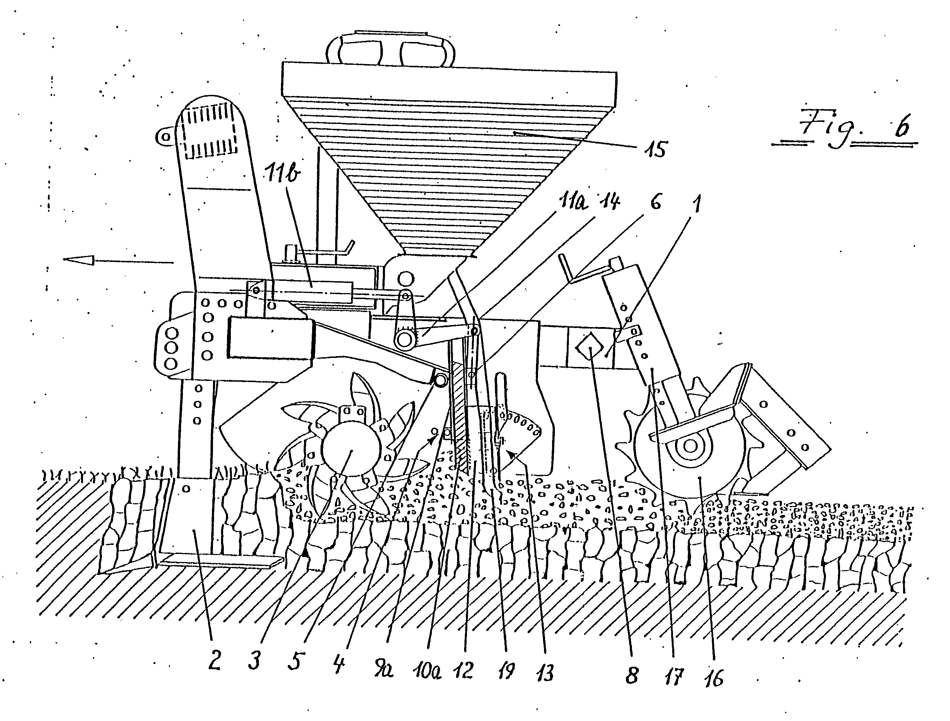

Die Figuren 2, 3 und 4 zeigen die höhenverstellbare Schutzklappe 4 in der Rück-, Drauf- und Seitenansicht. Die Figur 5 zeigt einen Teilschnitt, der die Lagerung des Klappenunterteils 10 im Klappenoberteil 9 verdeutlicht. Hierzu hat das Klappenoberteil auf der der Fahrtrichtung abgewandten Seite beidseits des Klappenunterteils 10 jeweils einen winkelförmigen Umgriff 20. In der durch die Umgriffe 20 gebildeten Führung ist das hohlkastenprofilförmige Klappenunterteil höhenverstellbar untergebracht. Das Klappenunterteil ist rechts und links durch ein angeschweißtes Vierkantrohr begrenzt, das die Spindel 18 und die nicht dargestellte Spindelmutter aufnimmt. Die Spindel 18 kann zur Höhenverstellung über die Handkurbel 11 gedreht werden.

In den Figuren 2, 3 und 4 erkennt man den Anlenkpunkt 6, der in der Mitte der Rückseite des Klappenunterteils befestigt ist. In Fahrtrichtung gesehen hinter ihm befindet sich ein U-Träger 21 in dem die Saatlegeröhren 19 integriert sind. Der U-Träger selbst ist über zwei an seinen Enden angebrachte Winkel 22 über das Gelenk 23 an der Verstelleinrichtung 12 schwenkbar gelagert. Geschwenkt wird der U-Träger über die Griffe 23. Zur Arretierung des schwenkbaren U-Trägers sind an den Füßen der Hebel 23 die Indexbolzen 24 angebracht, die in eine der Arretierungsöffnungen 25 der Verstelleinrichtung 12 eingreifen. Die Verstelleinrichtung 12 ist,wie Figur 5 zeigt, am Klappenunterteil angeschweißt.

Wie man sieht, bewirkt die Höhenverstellung des Unterteils der Schutzklappe eine automatische Anpassung der Saatgutablagetiefe. Es wird damit erreicht, daß das Saatgut immer in der richtigen Tiefe abgelegt wird.

Das gleiche Ziel kann auch durch die Ausbildung der Schutzklappe gemäß Fig. 6 erreicht werden. In diesem Fall ist die Schutzklappe 10a in vertikaler Richtung einteilig ausgeführt und in ihrer Gesamtheit etwa vertikal verfahrbar am Gestell gelagert.

Dazu greift sie mit ihren beiden seitlichen Rändern in U-förmige Schienen 9a ein, die ihr die gewünschte Vertikalführung geben. Die Betätigung der Schutzklappe 10a erfolgt über einen Winkelhebel 11a, an dessen anderen Schenkel ein Hydraulikzylinder 11b angreift. Auf diese Weise kann die Höhenverstellung der Schutzklappe bequem vom Fahrersitz des Traktors aus erfolgen und insbesondere während der Fahrt optimal an die Bodenbedingungen angepaßt werden.

Auch bei dieser Ausführungsform besteht die Möglichkeit, die Neigung der Schutzklappe 10a zu verstellen, indem die Schienen 9a über die Achse 5 schwenkbar am Gestell 1 gelagert sind. Die Einstellung des Schwenkwinkels kann ebenso wie in Fig. 1 erfolgen. Die entsprechenden Bauelemente sind hier der Übersichtlichkeit wegen weggelassen.

Wesentlich ist, daß auch bei dieser in ihrer Gesamtheit verstellbaren Schutzklappe am unteren Ende die Sävorrichtung 13 angebracht ist, so daß sie automatisch die Höhenverstellung der Schutzklappe mitmacht.

## Ansprüche

1. Bodenbearbeitungsgerät, bestehend aus einem an eine Zugmaschine ankuppelbaren oder einen eigenen Antrieb aufweisenden Gestell, in dem mindestens eine angetriebene Vorrichtung zur mechanischen Lockerung des Bodens, insbesondere ein Zinkenrotor mit horizontaler Drehachse und in Fahrtrichtung dahinter zumindest eine quer zur Fahrtrichtung angeordnete Schutzklappe sowie gegebenenfalls dahinter eine Sävorrichtung eingebaut ist,
dadurch gekennzeichnet,
daß die Unterkante der Schutzklappe (4) etwa vertikal verstellbar ist.

2. Bodenbearbeitungsgerät nach Anspruch 1 mit einer in vertikaler Richtung verstellbaren Sävorrichtung (13) dadurch gekennzeichnet, daß die Sävorrichtung (13) am unteren Klappenbereich befestigt ist.

3. Bodenbearbeitungsgerät nach Anspruch 1, dadurch gekennzeichnet, daß an einem am Gestell (1) gelagerten Klappenoberteil (9) ein ausfahrbares Klappenunterteil (10) angebracht ist.

4. Bodenbearbeitungsgerät nach Anspruch 1, dadurch gekennzeichnet, daß das Klappenoberteil (9) am Gestell (1) befestigt ist.

5. Bodenbearbeitungsgerät nach Anspruch 1, dadurch gekennzeichnet, daß das Klappenoberteil (9) schwenkbar am Gestell (1) gelagert ist.

6. Bodenbearbeitungsgerät nach einem der vorhergehenden Ansprüche, dadurch gekennzeichnet, daß das Klappenunterteil (10) an mindestens einer Schiene (20) parallel oder fluchtend geführt ist.

7. Bodenbearbeitungsgerät nach Anspruch 6, dadurch gekennzeichnet, daß das Klappenunterteil (10) über mindestens ein Schraubgetriebe (11, 18) von Hand oder motorisch verfahrbar ist.

8. Bodenbearbeitungsgerät nach den Ansprüchen 6 oder 7, dadurch gekennzeichnet, daß das Klappenunterteil (10) hinter dem Klappenoberteil (9) angeordnet ist.

9. Bodenbearbeitungsgerät nach Anspruch 1, dadurch gekennzeichnet, daß die Schutzklappe in vertikaler Richtung einteilig ausgebildet ist und aus weichelastischem Material besteht.

10. Bodenbearbeitungsgerät nach Anspruch 1, dadurch gekennzeichnet, daß die Schutzklappe (10a) in ihrer Gesamtheit etwa vertikal verfahrbar am Gestell (1) geführt ist.

11. Bodenbearbeitungsgerät nach Anspruch 10, dadurch gekennzeichnet, daß die Schutzklappe (10a) an ihren beiden seitlichen Rändern jeweils an Schienen (9a) des Gestelles (1) geführt ist.

12. Bodenbearbeitungsgerät nach Anspruch 10 oder 11, dadurch gekennzeichnet, daß das Verfahren der Schutzklappe (10a) durch Hydraulikzylinder (11b) erfolgt.

13. Bodenbearbeitungsgerät nach Anspruch 11, dadurch gekennzeichnet, daß die Schienen (9a) verschwenkbar am Gestell (1) gelagert sind.

Fig. 1

Fig. 2

Fig. 3

Fig. 4

Fig. 5

Schnitt A-B

Fig. 6

EP 0 333 150 A2